# EUROPÄISCHE PATENTSCHRIFT

(11) **EP 1 516 128 B1**
(45) Veröffentlichungstag und Bekanntmachung des Hinweises auf die Patenterteilung: **24.01.2007**
(21) Anmeldenummer: 03737974.0
(22) Anmeldetag: 27.05.2003
(51) Int. Cl.: F16C 29/06

(54) **LINEARWÄLZLAGER**
LINEAR ROLLER BEARING
PALIER A ROULEMENT LINEAIRE

(30) Priorität: 21.06.2002 DE 10227727
(43) Veröffentlichungstag der Anmeldung: 23.03.2005
(73) Patentinhaber: Schaeffler KG, 91074 Herzogenaurach (DE)
(72) Erfinder: MENGES, Martin, 66424 Homburg (DE); ELICKER, Thomas, 66564 Ottweiler (DE)
(86) Internationale Anmeldenummer: PCT/EP2003/005528
(87) Internationale Veröffentlichungsnummer: WO 2004/001246

(56) Entgegenhaltungen:
- DE-A- 3 620 571
- US-A- 5 727 884
- US-A- 6 132 093
- US-B1- 6 203 199

## Beschreibung

### Gebiet der Erfindung

Die vorliegende Erfindung betrifft Linearwälzlager. Derartige Linearwälzlager werden beispielsweise in Linearführungen von Werkzeugmaschinen verwendet.

Aus DE 36 20 571 A1 beispielsweise ist ein Linearwälzlager gemäß den Merkmalen des Oberbegriffs des Anspruchs 1 bekannt. Der zwischen den beiden Tragkanälen angeordnete Rückhaltesteg umgreift die Kugeln über einen Teil ihres Umfangs, so dass verhindert ist, dass die Kugeln aus dem Wälzkörperkanal herausfallen, wenn der Führungswagen von der Führungsschiene abgenommen wird. Bei großen Baureihen derartiger Linearwälzlager weisen die Rückhaltestege einen entsprechend vergrößerten Querschnitt auf. Da die Rückhaltestege in der Regel aus Kunststoff im Spritzverfahren hergestellt sind, kann es bei derart großen Rückhaltestegen zu einer ungleichmäßigen Abkühlung im Werkzeug kommen, so dass ein unerwünschter Verzug die Folge ist. Wenn derart ungünstig verformte Rückhaltestege in die Führungswagen eingebaut werden, kann es beispielsweise zu einem unerwünschten vergrößerten Reibkontakt zwischen dem Rückhaltesteg und den Wälzkörpern kommen, so dass ein unerwünschter Abrieb an den Rückhaltestegen die Folge ist. Eine einwandfreie Funktion der Rückhaltestege kann in diesem Fall nicht mehr gewährleistet sein.

Aufgabe der vorliegenden Erfindung ist es daher, ein Linearwälzlager nach den Merkmalen des Oberbegriffs des Anspruchs 1 anzugeben, bei dem dieser Nachteil behoben ist.

Erfindungsgemäß wird diese Aufgabe dadurch gelöst, dass der Rückhaltesteg in Längsrichtung geteilt aus wenigstens zwei Längsteilen gebildet ist. Durch das Teilen des Rückhaltestegs in mehrere Längsteile sind die Einzelquerschnitte der Längsteile gegenüber dem Gesamtquerschnitt deutlich verkleinert. Ein Abkühlen im Werkzeug kann daher gleichmäßig erfolgen. Unerwünschter Verzug an den einzelnen Längsteilen ist deutlich reduziert. Die einzelnen Längsteile können dann problemlos zu dem Rückhaltesteg zusammengesetzt und schließlich in das Linearwälzlager eingebaut werden. Wenn die Längsteile identisch sind, fallen zudem keine erhöhten Kosten für mehrere Werkzeuge an.

Vorzugsweise umschließt der Rückhaltesteg einen entlang seiner Längserstreckung von den Längsteilen gemeinsam begrenzten Hohlraum. Der Hohlraum ist so bemessen, dass nach Möglichkeit an beiden Längsteilen eine gleichmäßige Wanddicke eingestellt ist. Eine gleichmäßige Wanddicke ermöglicht ein gleichmäßiges Abkühlen ohne unerwünschten Verzug. Das Gewicht dieses Rückhaltestegs ist reduziert. Die eingesetzte Kunststoffmasse ist ebenfalls reduziert. Dieser Hohlraum kann problemlos an den beiden Längsteilen als Ausnehmungen an deren einander zugewandten Teilungsseiten ausgebildet sein. Diese Ausnehmungen oder Mulden bilden den Hohlraum, wenn die Längsteile zu dem Rückhaltesteg zusammengesetzt sind.

Damit die Längsteile einwandfrei und sicher zueinander angeordnet sind, wenn sie zu dem Rückhaltesteg zusammengefügt werden, kann es zweckmäßig sein die Längsteile über eine Steckverbindung miteinander zu verbinden. Diese Steckverbindung kann Vorsprünge und Ausnehmungen umfassen, wobei Vorsprünge des einen Längsteiles in Ausnehmungen des anderen Längsteiles mit geringem Spiel oder spielfrei eingreifen. Die Vorsprünge und Ausnehmungen können an jedem Längsteil so angeordnet sein, dass die Ausbildung von identischen Längsteilen möglich ist. Vorzugsweise ist der Rückhaltesteg aus zwei identischen Längsteilen gebildet.

Zur einwandfreien Halterung des Rückhaltestegs an dem Führungswagen können die Längsteile jeweils an ihren beiden Enden mit Teilzapfen versehen sein, die gemeinsam einen axialen Zapfen zum Eingriff in Ausnehmungen des Führungswagens bilden. Wenn der so gebildete Zapfen in eine Bohrung am Endglied eingreift, ist verhindert, dass sich die Teilzapfen zueinander verschieben können.

Nachstehend wird die Erfindung anhand eines in insgesamt dreizehn Figuren abgebildeten Ausführungsbeispiels näher erläutert. Es zeigen:
- Figur 1: einen Querschnitt durch ein erfindungsgemäßes Linearwälzlager,
- Figur 2: als Einzelheit ein Rücklaufrohr des erfindungsgemäßen Linear-wälzlagers in perspektivischer Darstellung,
- Figur 3: eine Hälfte des Rücklaufrohres aus Figur 2,
- Figur 4: einen teilweisen Längsschnitt durch das erfindungsgemäße Line-arwälzlager aus Figur 1,
- Figur 5: in perspektivischer Darstellung einen Teil des Rücklaufrohres und einen Teil des Endgliedes des Linearwälzlagers aus Figur 1,
- Figur 6: das mit dem Endglied verbundene Rücklaufrohr in vereinfachter Darstellung,
- Figur 7: in perspektivischer Darstellung teilweise das Endglied und das Rücklaufrohr,
- Figur 8: eine weitere perspektivische Darstellung des Endgliedes,
- Figur 9: die im Endglied angeordnete Zunge des Rücklaufrohres in vereinfachter Darstellung,
- Figur 10: einen Schnitt entlang der Linie X-X in Figur 9,
- Figur 11: in perspektivischer Darstellung den mittleren Rückhaltesteg als Einzelteil,
- Figur 12: eine Hälfte des mittleren Rückhaltestegs in perspektivischer Darstellung,
- Figur 13: einen Schnitt durch den mittleren Rückhaltesteg in vereinfachter Darstellung entlang der Linie XIII-XIII in Figur 11,
- Figur 14: einen modifizierten mittleren Rückhaltesteg in perspektivischer Darstellung,
- Figur 15: die im Endglied angeordneten Zungen des mittleren Rückhaltestegs aus Figur 14 in vereinfachter Darstellung und
- Figur 16: den im Endglied angeordneten mittleren Rückhaltesteg im Längsschnitt in schematischer Darstellung.

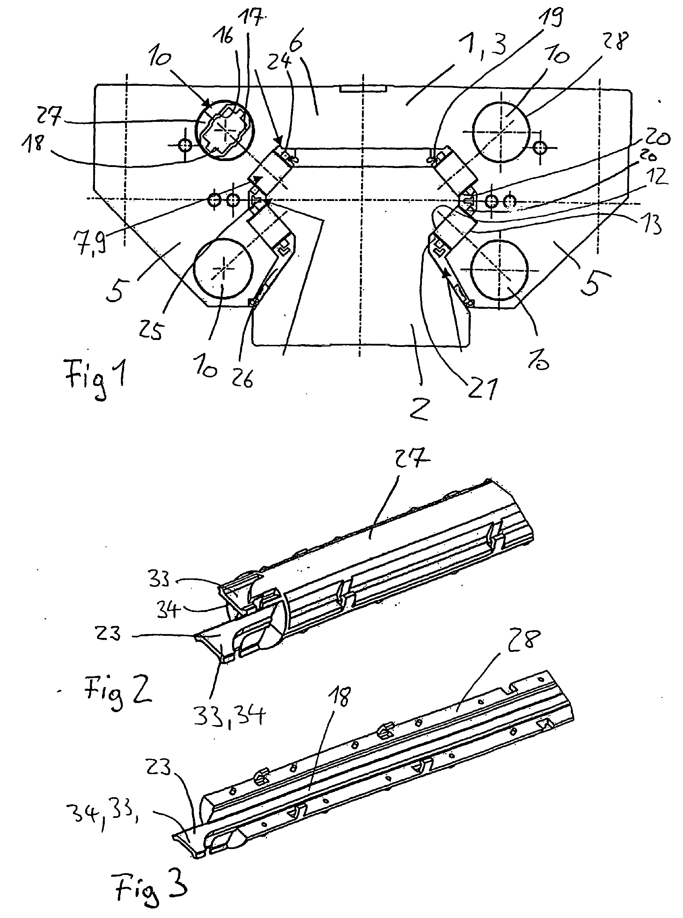

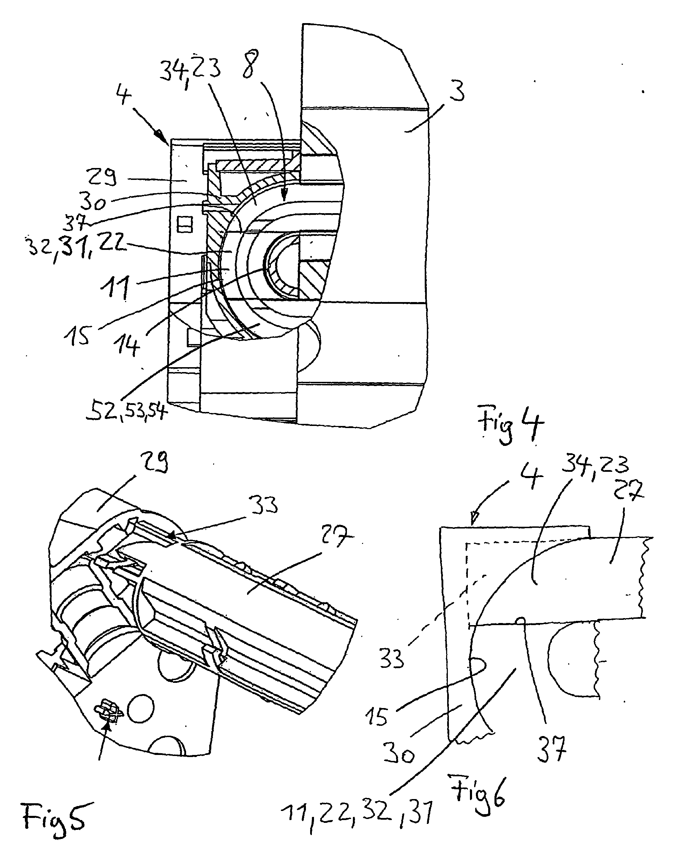

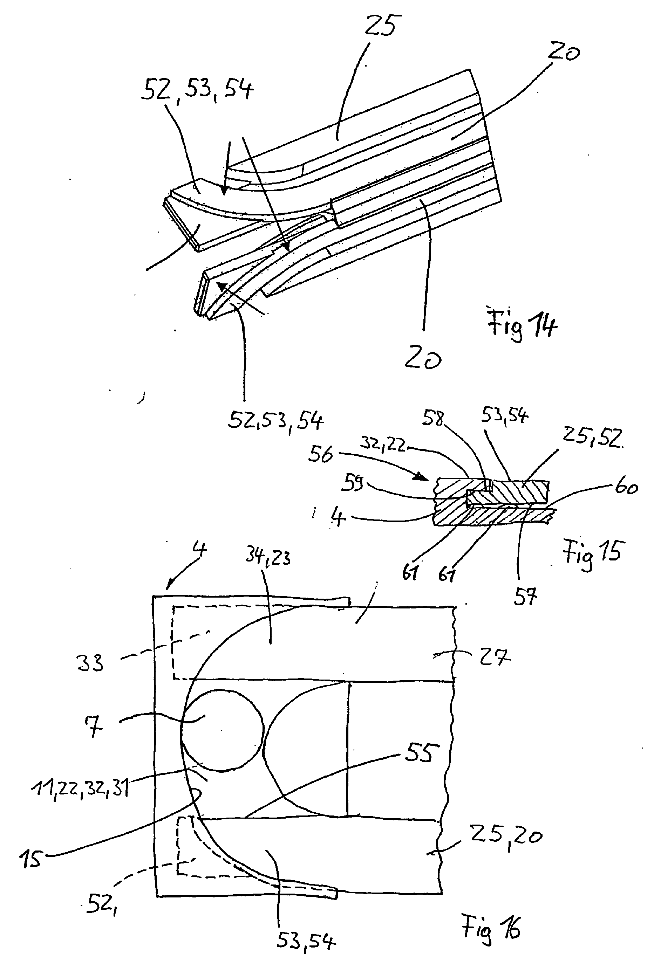

Figur 1 zeigt im Querschnitt eine erfindungsgemäße Linearführung mit einem Führungswagen 1, der auf einer Führungsschiene 2 wälzgelagert ist. Der Führungswagen 1 umfasst einen Tragkörper 3 und Endglieder 4 (siehe Figur 4) wobei die Endglieder 4 an beiden Stirnseiten des Tragkörpers 3 befestigt sind. Der Tragkörper 3 weist zwei Führungsschenkel 5 und einen diese beiden Führungsschenkel 5 einstückig miteinander verbindenden Verbindungssteg 6 auf, und zwar in der Weise, dass ein u-förmiger Tragkörper gebildet ist. Der Führungswagen 1 ist über Rollen 7 an der Führungsschiene 2 längsbeweglich gelagert. Die Rollen 7 sind in Rollenkanälen 8 angeordnet. Jeder Rollenkanal 8 umfasst einen Tragkanal 9 für tragende Rollen 7, einen Rücklaufkanal 10 für rücklaufende Rollen 7, und zwei den Tragkanal 9 und den Rücklaufkanal 10 miteinander verbindende Umlenkkanäle 11. Der Rollenkanal 8 weist Laufbahnen 12, 13, 14, 15, 16, 17 für die Rollen 7 auf. Die Laufbahnen 12 sind an der Führungsschiene 2 ausgebildet. An jeder Längsseite der Führungsschiene 2 sind zwei dieser Laufbahnen 12 in einem Winkel von etwa 90° zueinander angeordnet. Korrespondierende Laufbahnen 13 sind an den beiden Führungsschenkeln 5 des Tragkörpers 3 ausgebildet. Bei dieser Anordnung der Rollen 7 können über den Führungswagen sowohl Kräfte quer zur Führungsschiene 2 als auch Drehmomente übertragen werden. Im Umlenkkanal 11 ist eine konkav gekrümmte äußere Laufbahn 15 und eine konvex gekrümmte innere Laufbahn 14 für die Rollen 7 ausgebildet. Im Rücklaufkanal 10 sind an einander gegenüberliegenden Seiten Laufbahnen 16 und 17 für die Rollen 7 ausgebildet. Ferner umfasst der Rollenkanal 8 Seitenflächen 18, 19, 20, 21, 22, 23, 54 zur seitlichen Begrenzung des Rollenkanals 8 auf. Im Rücklaufkanal 10 sind an einander gegenüberliegende Seiten die Seitenflächen 18 ausgebildet. Im Umlenkkanal 11 sind die Seitenflächen 22, 23, 54 ausgebildet. Im Tragkanal 9 sind die Seitenflächen 19, 20, 21 ausgebildet.

Im Tragkanal 9 sind zu beiden Stirnseiten der Rollen 7 Rückhaltestege 24, 25, 26 angeordnet, die nachstehend unterschieden werden in einen oberen Rückhaltesteg 24, einen mittleren Rückhaltesteg 25 und in einen unteren Rückhaltesteg 26. Die Seitenfläche 19 ist an dem oberen Rückhaltesteg 24 ausgebildet, die Seitenfläche 20 ist an dem mittleren Rückhaltesteg 25 an einer Seite ausgebildet, die dem oberen Rückhaltesteg 24 zugewandt ist. Die Seitenfläche 21 ist an dem unteren Rückhaltesteg 26 ausgebildet und eine weitere Seitenfläche ist an dem mittleren Rückhaltesteg 25 ausgebildet, und zwar an der Seite, die dem unteren Rückhaltesteg 21 zugewandt ist. Die Rückhaltestege 24, 25, 26 umgreifen die Rollen 7 derart, dass diese verliersicher an dem Führungswagen 1 gehalten sind. Dies ist insbesondere dann zweckmäßig, wenn der Führungswagen 1 von der Führungsschiene 2 weggenommen wird.

Ein Rücklaufrohr 27 ist vorgesehen, das eine im Wesentlichen glatte äußere Zylinderfläche aufweist, wobei im inneren des Rücklaufrohres 27 eine Kontur zur Bildung des Rücklaufkanals 10 ausgebildet ist. Der Tragkörper 3 weist insgesamt vier Durchgangsbohrungen 28 auf, in denen je ein Rücklaufrohr 27 eingesetzt ist.

Das Endglied 4 (Figur 4) umfasst ein Kopfstück 29, das an dem Tragkörper 3 befestigt ist. In dem Kopfstück 29 ist eine Umlenkschale 30 angeordnet, dessen Seitenteile 31 an ihren einander zugewandten Seiten mit Endgliedflächen 32 versehen sind, wobei die Endgliedflächen 32die oben erwähnten Seitenflächen 22 des Umlenkkanals 11 bilden. Zwischen den beiden Seitenteilen 31 einer Umlenkschale 30 ist an der Umlenkschale 30 die äußere konkav gekrümmte Laufbahn 15 ausgebildet.

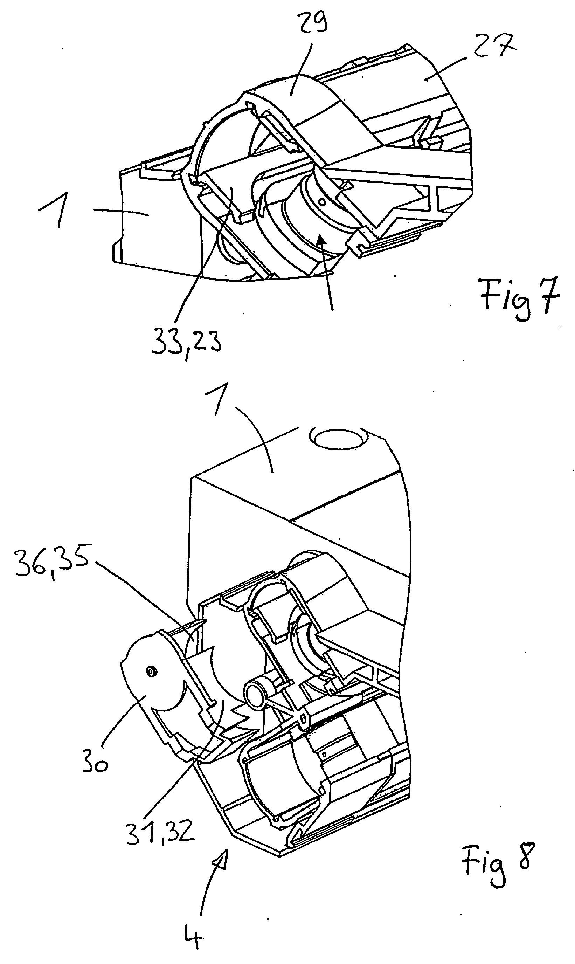

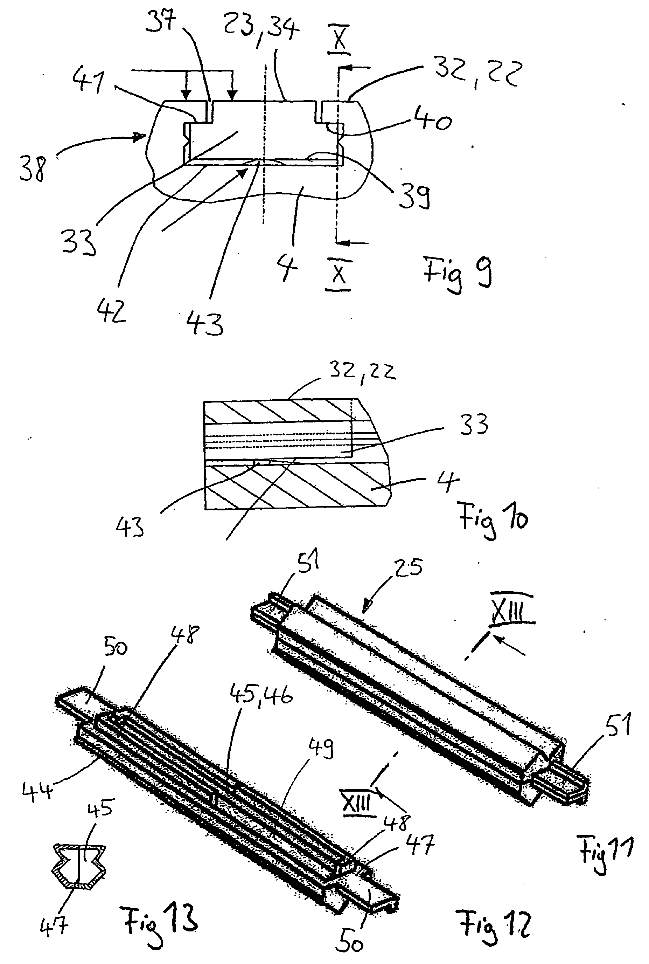

Die Figuren 2 und 3 zeigen das Rücklaufrohr 27. Das Rücklaufrohr 27 ist aus zwei identischen Längsteilen 28 zusammengesetzt. An beiden Enden des Rücklaufrohres 27 sind jeweils zwei Zungen 33 einstückig angeformt. Einander gegenüberliegende Zungenflächen 34 bilden die oben erwähnten Seitenflächen 23 des Umlenkkanals 11. Dies ist deutlich der Figur 4 zu entnehmen. Die Zungen 33 greifen dabei in das Endglied 4 ein. Figur 5 zeigt das Rücklaufrohr 27 und das Kopfstück 29, wobei das Rücklaufrohr 27 zum Kopfstück 29 hin so ausgerichtet ist, dass die Zungen 33 in das Kopfstück 29 eingeführt werden können.

Figur 7 zeigt das Kopfstück 29 und das Rücklaufrohr 27 mit eingeführten Zungen 33.

Der Figur 8 ist zu entnehmen, dass die Umlenkschale 30 mit Öffnungen 35 versehen ist, die Aufnahmen 36 für die Zungen 33 des Rücklaufrohres 27 bilden.

Figur 6 zeigt skizzenhaft das in das Endglied 4 eingesteckte Rücklaufrohr 27. Andeutungsweise zeigt die Figur 6 die Umlenkschale 30 mit der konkav gekrümmten äußeren Laufbahn 15 und gestrichelt dargestellt eine der Zungen 33 des Rücklaufrohres 27. Die Zungen 34 durchstoßen eine Ebene, in der die konkav gekrümmte äußere Laufbahn 15 angeordnet ist. Das bedeutet, die freien Enden der Zungen 33 sind jenseits dieser Laufbahn 15 angeordnet. Der Figur 6 ist ferner zu entnehmen, dass eine Trennfuge 37 zwischen jeder Zunge 33 und dem Endglied 4 parallel zu dem Rücklaufrohr 27 angeordnet ist. Im konkreten Ausführungsbeispiel ist die Trennfuge 37 von der Zunge 33 und dem Seitenteil 31 der Umlenkschale 30 begrenzt.

Diese geschilderte Verbindung zwischen dem Rücklaufrohr 27 und dem Endglied 4 eignet sich insbesondere bei groß dimensionierten Baureihen. Bei bekannten Linearwälzlagern ist eine Trennfuge zwischen Rücklaufrohr und Endglied quer zur Längsachse des Rücklaufrohres angeordnet. In derartigen Fällen ist die Trennfuge durch das freie Zungenende begrenzt. Wenn bei derartigen bekannten Ausführungen aufgrund einer ungünstigen Toleranzlage das Rücklaufrohr etwas zu kurz gerät, kann die Trennfuge so groß werden, dass es zu unerwünschten Laufgeräuschen und anderen Störungen im Wälzkörperumlauf kommen kann. Bei dem erfindungsgemäßen Linearwälzlager sind derartige Toleranzschwankungen ohne Einfluß auf die Trennfuge, da diese in Längsrichtung zum Rücklaufrohr 27 verläuft. In jedem Fall ist sichergestellt, dass das freie Ende der Zunge 33 jenseits des Umlaufkanals 11 angeordnet ist.

Um sicherzustellen, dass die einander zugewandten Zungenflächen 34 in einer gemeinsamen Ebene mit den einander zugewandten Endgliedflächen 32 des Endgliedes 4 angeordnet sind - wobei die einander zugewandten Zungenflächen 34 und die einander zugewandten Endgliedflächen 32 die Seitenflächen 22 und 23 des Umlenkkanals 11 bilden -, ist eine Positioniereinrichtung 38 vorgesehen.

Figur 9 zeigt eine mögliche konkrete Ausbildung einer Positioniereinrichtung 38. In der konkreten Anordnung umfasst die Positioniereinnrichtung Stützabschnitte 39 die aneinander abgewandten Zungenseiten der Zungen 33 vorgesehen sind, ferner Positionierabschnitte 40 die aneinander zugewandten Zungenseiten vorgesehen sind, ferner Anschlagabschnitte 41, die an dem Endglied 4 vorgesehen sind, wobei die Positionierabschnitte 40 der Zungen 33 an die Anschlagabschnitte 41 des Endgliedes 4 anschlagen, ferner Lagerabschnitte 42, die an dem Endglied 4 vorgesehen sind, wobei die Stützabschnitte 39 der Zungen 33 an den Lagerabschnitten 42 des Endgliedes 4 abgestützt sind.

Vorliegend sind die Stützabschnitte 39 mittelbar über eine Quetschrippe 43 an dem Lagerabschnitt 42 des Endgliedes 4 abgestützt. Die Quetschrippe 43 ist vorliegend einstückig an das Endglied 4 angeformt. Die Quetschrippe 43 ist keilförmig ausgebildet, so dass während des Einschiebens der Zungen 33 diese zunehmend eingekeilt wird zwischen den Positionierabschnitten 41 des Endgliedes 4 und den Quetschrippen 43.

Der Abstand zwischen den Positionierabschnitten 40 der Zunge 33 und der Zungenfläche 34 einerseits und der Abstand zwischen den Anschlagabschnitten 41 des Endgliedes 4 und der Endgliedfläche 32 des Endgliedes 4 andererseits sind derart aufeinander abgestimmt, dass die Endgliedfläche 32 und die Zungenfläche 34 in einer gemeinsamen Ebene liegen. Somit ist sichergestellt, dass die Seitenflächen 22 und 23 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22 und 23 brauchen lediglich die oben erwähnten Abstände einwandfrei eingehalten zu werden. Toleranzschwankungen an anderen Stellen des Endgliedes 4 oder des Rücklaufrohres 27 haben keinen Einfluss auf die Lage der Zungenfläche 34 und der Endgliedfläche 32 zueinander.

Die Figuren 11 bis 13 zeigen den besonders ausgebildeten mittleren Rückhaltesteg 25. Der Rückhaltesteg 25 ist aus zwei identischen Längsteilen 44 gebildet. Die Zweiteilung ist insbesondere dann von Vorteil, wenn Rückhaltestege für große Baureihen vorzusehen sind. In derartigen Fällen können diese Rückhaltestege 200mm und länger ausgebildet sein und einen Querschnitt aufweisen, der 7mm und größer sein kann. Vorzugsweise sind derartige Rückhaltestege aus Kunststoff im Spritzverfahren hergestellt. Bei einteilig ausgeführten Rückhaltestegen kann es beim Abkühlen in der Spritzform zu einem unerwünschten ungleichmäßigen Erstarren der Kunststoffmasse kommen, so dass sich ein unerwünschter Verzug an dem Rückhaltesteg einstellt. Mit dem hier vorgeschlagenen zweiteilig - oder auch drei- oder vierteilig - ausgeführten Rückhaltesteg sind diese Nachteile behoben. Denn die Querschnitte in der Form des Werkzeugs können nun so ausgelegt sein, dass ein unerwünschter Verzug nicht eintritt. Vorzugsweise umschließen die beiden Längsteile 44 entlang ihrer Längserstreckung einen Hohlraum 45, so dass die Wanddicken über dessen Längserstreckung weitgehend konstant sind und jedenfalls so bemessen sind, dass ein einwandfreies Abkühlen ohne unerwünschten Verzug gewährleistet ist. Der Hohlraum ist gebildet durch Ausnehmungen 46, die an den Längsteilen 44 an deren einander zugewandten Teilungsseiten 47 vorgesehen sind. Insbesondere der Figur 12 ist zu entnehmen, dass die Längsteile 44 mit Stegen 48 versehen sind, wobei die Stege 48 beider Längsteile 44 zur Bildung einer Steckverbindung 49 ineinander greifen, um den Rückhaltesteg 25 zu bilden.

Wenn die beiden Längsteile 44 an ihren einander zugewandten Teilungsseiten 47 jeweils mit Vorsprüngen und Ausnehmungen versehen sind, sind je ein Vorsprung und eine Ausnehmung an jedem Längsteil symmetrisch zu einer Quermittellinie des Rückhaltestegs 25 angeordnet. Bei dieser symmetrischen Anordnung können die beiden Längsteile 44 identisch ausgebildet sein und problemlos zusammengesteckt werden.

Jedes Längsteil 44 weist an beiden Enden Teilzapfen 50 auf. Wenn die beiden Längsteile 44 zusammengefügt sind, bilden die zusammengesetzten Teilzapfen 50 jeweils einen Zapfen 51. Die Zapfen 51 werden in entsprechende Zapfenaufnahmen des Endgliedes 4 eingesteckt. Diese Zapfenausbildung und das Einstecken der Zapfen in Aufnahmen trägt zu einer einwandfreien Verbindung der beiden Längsteile des Rückhaltestegs bei.

Figur 14 zeigt in perspektivischer Darstellung den mittleren Rückhaltesteg 25. An seinen Enden weist der Rückhaltesteg 25 Zungen 52 auf, deren Zungenfläche 53 jeweils eine Seitenfläche 54 des jeweiligen Umlenkkanals 11 bilden. Ebenso wie die Zungen 33 des Rücklaufrohres 27 durchstoßen die Zungen 52 die Ebene, in der die konkav gekrümmte äußere Laufbahn 15 des Endgliedes 4 angeordnet ist. Das bedeutet, die freien Enden der Zungen 52 sind jenseits dieser Laufbahn 15 angeordnet. Auch hier ist eine Trennfuge 55 zwischen jeder Zugen 52 und dem Endglied 4 parallel zu dem Rückhaltesteg 25 angeordnet. In konkreten Ausführungsbeispiel ist die Trennfuge 55 von der Zunge 52 und dem Seitenteil 31 der Umlenkschale 30 begrenzt. Auch hier tritt der erfindungsgemäße Vorteil ein, das Toleranzschwankungen in der Länge des Rückhaltestegs 25 keinen Einfluß auf die Breite der Trennfuge 55 haben. Demzufolge können die Rollen 7 einwandfrei mit ihren Stirnseiten den Umlenkkanal 11 passieren.

Um sicherzustellen, dass die Zungenflächen 53 in einer gemeinsamen Ebene mit den Endgliedflächen 32 angeordnet sind, - wobei die Zungenflächen 53 und die Endgliedflächen 32 die Seitenflächen 54 und 22 des Umlenkkanals 11 bilden -, ist eine weitere Positioniereinrichtung 56 vorgesehen.

Figur 15 zeigt in schematischer Darstellung die Anordnung der Zunge 52 des Rückhaltestegs 25 im Endglied 4 mit der Positioniereinrichtung 56. Diese Positioniereinrichtung 56 umfasst einen Stützabschnitt 57, der an der von der Zungenfläche 53 abgewandten Zungenseite der Zunge 52 vorgesehen ist, ferner einen Positionierabschnitt 58, der an der die Zungenfläche 53 aufweisenden Zungenseite der Zunge 52 vorgesehen ist, ferner einen Anschlagabschnitt 59, der an dem Endglied 4 vorgesehen ist, wobei der Positionierabschnitt 58 der Zunge 52 an den Anschlagabschnitt 59 des Endgliedes 4 anschlägt, ferner einen Lagerabschnitt 60, der an dem Endglied 4 vorgesehen ist, wobei der Stützabschnitt 57 der Zunge 52 an dem Lagerabschnitt 60 des Endgliedes 4 abgestützt ist. Vorliegend sind die Stützabschnitte 57 mittelbar über Quetschrippen 61 an dem Lagerabschnitt 60 des Endgliedes 4 abgestützt. Die Quetschrippen 61 sind vorliegend einstückig an das Endglied 4 angeformt. Die Quetschrippen 61 sind keilförmig ausgebildet, so dass während des Einschiebens der Zungen 52 diese zunehmend eingekeilt werden zwischen den Positionierabschnitten 58 des Endgliedes 4 und den Quetschrippen 61.

Der Abstand zwischen den Positionierabschnitten 58 der Zunge 52 und der Zungenfläche 53 einerseits und der Abstand zwischen den Anschlagabschnitten 59 des Endgliedes 4 und der Endgliedfläche 32 des Endgliedes 4 andererseits ist derart aufeinander abgestimmt, dass die Endgliedfläche 32 und die Zungenfläche 53 in einer gemeinsamen Ebene liegen. Somit ist sichergestellt, dass die Seitenflächen 22, 23, 54 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22, 23, 54 brauchen lediglich die oben erwähnten Abstände einwandfrei eingehalten zu werden. Toleranzschwankungen an anderen Stellen des Endgliedes 4 oder des Rückhaltesteges 25 haben keinen Einfluss auf die Lage der Zungenfläche 53 und der Endgliedfläche 32 zueinander.

### Positionszahlenliste

- 1: Führungswagen
- 2: Führungsschiene
- 3: Tragkörper
- 4: Endglied
- 5: Führungsschenkel
- 6: Verbindungssteg
- 7: Rolle
- 8: Rollenkanal
- 9: Tragkanal
- 10: Rücklaufkanal
- 11: Umlenkkanal
- 12: Laufbahn
- 13: Laufbahn
- 14: Laufbahn
- 15: Laufbahn
- 16: Laufbahn
- 17: Laufbahn
- 18: Seitenfläche
- 19: Seitenfläche
- 20: Seitenfläche
- 21: Seitenfläche
- 22: Seitenfläche
- 23: Seitenfläche
- 24: Rückhaltesteg
- 25: Rückhaltesteg
- 26: Rückhaltesteg
- 27: Rücklaufrohr
- 28: Durchgangsbohrung
- 29: Kopfstück
- 30: Umlenkschale
- 31: Seitenteil
- 32: Endgliedfläche
- 33: Zunge
- 34: Zungenfläche
- 35: Öffnung
- 36: Aufnahme
- 37: Trennfuge
- 38: Positioniereinrichtung
- 39: Stückabschnitt
- 40: Positionierabschnitt
- 41: Anschlagabschnitt
- 42: Lagerabschnitt
- 43: Quetschrippe
- 44: Längsteil
- 45: Hohlraum
- 46: Ausnehmung
- 47: Teilungsseite
- 48: Steg
- 49: Steckverbindung
- 50: Teilzapfen
- 51: Zapfen
- 52: Zungen
- 53: Zungenfläche
- 54: Seitenfläche
- 55: Trennfuge
- 56: Positioniereinrichtung
- 57: Stützabschnitt
- 58: Positionierabschnitt
- 59: Anschlagabschnitt
- 60: Lagerabschnitt
- 61: Quetschrippe

## Patentansprüche

1. Linearwälzlager mit einem an einer Führungsschiene (2) über Wälzkörper (7) wälzlagerbaren Führungswagen (1), dessen beide Führungsschenkel (5) jeweils mit mindestens zwei endlosen Wälzkörperkanälen für die Wälzkörper (7) versehen sind, welcher Wälzkörperkanal (8) einen Tragkanal (3) für tragende Wälzkörper (7), einen Rücklaufkanal (10) für rücklaufende Wälzkörper (7) und zwei den Umlenkkanal (11) und den Rücklaufkanal (10) miteinander verbindenden Umlenkkanäle (11) aufweist, wobei zwischen zwei einander benachbarten Tragkanälen (9) eines Führungsschenkels (5) ein an dem Führungswagen (1) gehalterter Rückhaltesteg (25) vorgesehen ist, der die Wälzkörper (7) der beiden Tragkanäle (9) umgreift, **dadurch gekennzeichnet, daß** der Rückhaltesteg (25) in Längsrichtung geteilt aus wenigstens zwei Längsteilen (44) gebildet ist.

2. Linearwälzlager nach Anspruch 1, bei dem der Rückhaltesteg (25) einen entlang seiner Längserstreckung von den Längsteilen (44) gemeinsam begrenzten Hohlraum (45) umschließt.

3. Linearwälzlager nach Anspruch 2, bei dem der Rückhaltesteg (25) entlang seiner Längserstreckung eine an den Hohlraum (45) angrenzende Wandung mit im wesentlichen gleichmäßiger Wanddicke aufweist.

4. Linearwälzlager nach Anspruch 2, bei dem der Hohlraum (45) gebildet ist von Ausnehmungen (46), die an den Längsteilen (44) an deren einander zugewandten Teilungsseiten (47) vorgesehen sind.

5. Linearwälzlager nach Anspruch 1, bei dem die Längsteile (44) über eine Steckverbindung (49) miteinander verbunden sind.

6. Linearwälzlager nach Anspruch 1, bei der der Rückhaltesteg (25) aus zwei identischen Längsteilen (44) gebildet ist.

7. Linearwälzlager nach Anspruch 1, bei der die Längsteile (44) jeweils an ihren beiden Enden mit Teilzapfen (50) versehen sind, die gemeinsam einen axialen Zapfen (51) zum Eingriff in Ausnehmungen des Führungswagens (1) versehen sind.

## Claims

1. Linear rolling bearing having a guide carriage (1) which can be rolling-bearing-mounted on a guide rail (2) by means of roller bodies (7), the two guide limbs (5) of which guide carriage (1) are in each case provided with at least two endless rolling body channels for the rolling bodies (7), said rolling body channel (8) having a load-bearing channel (3) for load-bearing rolling bodies (7), a return channel (10) for returning rolling bodies (7) and two deflecting channels (11) which connect the load-bearing channel (3) and the return channel (10) to one another, with a retaining web (25) which is mounted on the guide carriage (1) being provided between two adjacent load-bearing channels (9) of a guide limb (5), which retaining web (25) engages around the rolling bodies (7) of the two load-bearing channels (9), **characterized in that** the retaining web (25) is formed, so as to be divided in the longitudinal direction, from at least two longitudinal parts (44).

2. Linear rolling bearing according to Claim 1, in which the retaining web (25) encloses a cavity (45) which is delimited along its longitudinal extent by the longitudinal parts (44) together.

3. Linear rolling bearing according to Claim 2, in which the retaining web (25) has, along its longitudinal extent, a wall which adjoins the cavity (45) and has a substantially constant wall thickness.

4. Linear rolling bearing according to Claim 2, in which the cavity (45) is formed by recesses (46) which are provided in the parting sides (47), which face one another, of the longitudinal parts (44).

5. Linear rolling bearing according to Claim 1, in which the longitudinal parts (44) are connected to one another by means of a plug-type connection (49).

6. Linear rolling bearing according to Claim 1, in which the retaining web (25) is formed from two identical longitudinal parts (44).

7. Linear rolling bearing according to Claim 1, in which the longitudinal parts (44) are in each case provided at their two ends with partial pegs (50) which together form an axial peg (51) for engaging in recesses of the guide carriage (1).

## Revendications

1. Palier à roulement linéaire comprenant un chariot de guidage (1) pouvant être monté par palier à roulement sur un rail de guidage (2) au moyen de corps de roulement (7), dont les deux branches de guidage (5) sont dotées chacune d'au moins deux canaux continus de corps de roulement pour les corps de roulement (7), lequel canal de corps de roulement (8) présente un canal porteur (3) pour des corps de roulement (7) porteurs, un canal de recul (10) pour des corps de roulement (7) qui reculent et deux canaux d'inversion (11) reliant entre eux le canal porteur (3) et le canal de recul (10), une barrette de retenue (25) fixée sur le chariot de guidage (1) étant prévue entre deux canaux porteurs (9) voisins l'un de l'autre d'une branche de guidage (5), laquelle barrette entoure les corps de roulement (7) des deux canaux porteurs (9), **caractérisé en ce que** la barrette de retenue (25), divisée dans le sens longitudinal, est formée par au moins deux parties longitudinales (44).

2. Palier à roulement linéaire selon la revendication 1, dans lequel la barrette de retenue (25) entoure une cavité (45) délimitée conjointement par les parties longitudinales (44) le long de son étirement longitudinal.

3. Palier à roulement linéaire selon la revendication 2, dans lequel la barrette de retenue (25) présente le long de son étirement longitudinal une paroi contiguë à la cavité (45) avec une épaisseur de paroi sensiblement uniforme.

4. Palier à roulement linéaire selon la revendication 2, dans lequel la cavité (45) est formée par des évidements (46) qui sont prévus sur les parties longitudinales (44) sur leurs côtés de division (47) tournés les uns vers les autres.

5. Palier à roulement linéaire selon la revendication 1, dans lequel les parties longitudinales (44) sont reliées l'une à l'autre au moyen d'une connexion par fiche (49).

6. Palier à roulement linéaire selon la revendication 1, dans lequel la barrette de retenue (25) est formée par deux parties longitudinales (44) identiques.

7. Palier à roulement linéaire selon la revendication 1, dans lequel les parties longitudinales (44) sont dotées chacune sur leurs deux extrémités de pivots partiels (50) qui ensemble constituent un pivot (51) axial pour l'engagement dans des évidements du chariot de guidage (1).
